# EUROPÄISCHE PATENTSCHRIFT

(11) **EP 2 483 573 B1**
(45) Veröffentlichungstag und Bekanntmachung des Hinweises auf die Patenterteilung: **01.01.2020**
(21) Anmeldenummer: 10765373.5
(22) Anmeldetag: 22.09.2010
(51) Int. Cl.: F16F 1/362, B66C 19/00, B66C 13/06, B66C 13/10, B66C 13/16, B66D 1/26, F16F 3/08

(54) **PORTALHUBWAGEN ZUM EINSATZ IN CONTAINERTERMINALS UND FÜR ANDERE TRANSPORTAUFGABEN**
STRADDLE CARRIER FOR USE IN CONTAINER TERMINALS AND FOR OTHER TRANSPORT PURPOSES
CHARIOT CAVALIER DESTINÉ À ÊTRE UTILISÉ DANS DES TERMINAUX À CONTENEURS ET POUR D'AUTRES TRANSPORTS

(30) Priorität: 02.10.2009 DE 102009048131
(43) Veröffentlichungstag der Anmeldung: 08.08.2012
(73) Patentinhaber: Pfenning Elektroanlagen GmbH, 97199 Ochsenfurt (DE)
(72) Erfinder: GIESE, Peter, 91074 Herzogenaurach (DE)
(74) Vertreter: Lelgemann, Karl-Heinz
(86) Internationale Anmeldenummer: PCT/EP2010/005794
(87) Internationale Veröffentlichungsnummer: WO 2011/038852

(56) Entgegenhaltungen:
- DE-U1-202006 017 624
- FR-A1- 2 669 317
- GB-A- 715 796
- JP-A- 11 035 282
- JP-U- 62 032 079
- US-A- 3 746 182
- US-A- 4 715 762

## Beschreibung

Die Erfindung bezieht sich auf einen Portalhubwagen zum Einsatz in Containerterminals und für andere Transportaufgaben, mit einem Rahmengestell, einem Lastaufnahmemittel, das zwischen dem Rahmengestell hängt und mit einem Container verriegelbar ist, Fahrträgern, die am unteren Bereich des Rahmengestells angeordnet sind und jeweils eine Vielzahl in einer Reihe angeordneter Räder aufweisen, und Hubwinden, mittels denen Hubseile auf- und abrollbar sind, die mit einem Ende an den Hubwinden angebracht und mittels lastaufnahmemittel- und rahmengestellseitiger Hubseillagerpunkte geführt sind.

Im Betrieb derartiger Portalhubwagen werden deren Hubseile starken mechanischen Beanspruchungen unterzogen. Entsprechende Laststöße treten insbesondere bei Lastaufnahmen und bei bestimmten Fahrmanövern, insbesondere bei Brems- und Beschleunigungsvorgängen, auf. DE 20 2006 017624 U1 offenbart einen Portalhubwagen gemäß dem Oberbegriff des Anspruchs 1.

Der Erfindung liegt die Aufgabe zugrunde, den eingangs geschilderten Portalhubwagen zum Einsatz in Containerterminals und für andere Transportaufgaben derart weiterzubilden, dass die von seinen Hubseilen aufzunehmenden mechanischen Beanspruchungen erheblich reduziert werden.

Diese Aufgabe wird mit einem vergleichsweise geringen mechanisch-konstruktiven Aufwand dadurch gelöst, dass an zumindest einem Hubseillagerpunkt jedes Hubseils des Portalhubwagens eine Federeinrichtung angeordnet ist, mittels der auf die Hubseile übertragene Laststöße dämpfbar sind. Die Lastspitzen jeder mechanischen Beanspruchung der Hubseile werden erfindungsgemäß mittels der dem jeweiligen Hubseil zugeordneten Federeinrichtung aufgenommen, mit der Folge, dass die Lebensdauer der Hubseile erheblich erhöht ist bzw. dass - bei gleicher geplanter Lebensdauer - die technischen Anforderungen an die Hubseile reduziert werden können.

Gemäß einer vorteilhaften Ausführungsform des erfindungsgemäßen Portalhubwagens ist einem rahmengestellseitigen Festpunktlager des Hubseils eine Federeinrichtung zugeordnet.

Alternativ oder zusätzlich ist es möglich, einem lastaufnahmemittelseitigen Umlenkrollenlager des Hubseils eine Federeinrichtung zuzuordnen.

Schließlich sind auch erfindungsgemäße Ausführungsformen zweckmäßig, bei denen einem rahmengestellseitigen Umlenkrollenlager des Hubseils eine Federeinrichtung zugeordnet ist.

Sofern die Federeinrichtungen eine Kraftmessdose aufweisen, mittels der die Höhe von auf das Hubseil ausgeübten Laststößen ermittelbar ist, kann für jedes Hubseil abgespeichert werden, welchen mechanischen Beanspruchungen es unterzogen worden ist. Hierdurch können Wartungs- und/oder Austauschintervalle optimiert werden.

Gemäß einer weiteren vorteilhaften Ausführungsform des erfindungsgemäßen Portalhubwagens weisen dessen Federeinrichtungen eine Schlaffseilerkennungseinrichtung auf, mittels der eine Erschlaffung des jeweiligen Hubseils erfassbar ist. Hierdurch werden automatisch irreguläre Betriebszustände erfassbar, bei denen eine mittels des Portalhubwagens zu transportierende Last nicht von allen Hubseilen getragen wird.

Hierzu weist die Schlaffseilerkennungseinrichtung vorteilhaft zwei voneinander weg vorgespannte Plattenelemente auf, deren Abstand messbar ist. Üblicherweise werden die vorgespannten Plattenelemente durch die am Hubseil angreifenden Lasten gegen die Federvorspannung aufeinander zu gedrückt, wobei für den Fall, dass keine Last am Hubseil ist, der Abstand der beiden Plattenelemente einen vorgebbaren Maximalabstand überschreitet, ab dem mittels der Schlaffseilerkennungseinrichtung ein ein schlaffes Hubseil anzeigendes Signal generiert wird.

Eine der eigentlichen Reduzierung der mechanischen Beanspruchung dienende Dämpfungseinheit der Federeinrichtung hat vorteilhaft zwei in Lastrichtung des Hubseils hintereinander angeordnete Federelemente. Die Federelemente können mittels einer Zwischenplatte voneinander getrennt sein, so dass die mittels der Federelemente aufzunehmenden Verformungen möglichst gleichmäßig auf die gesamte Dämpfungseinheit verteilt werden.

Vorteilhaft sind die Federelemente der Dämpfungseinrichtung aus einem Metallgewebekörper od.dgl. ausgebildet, der einerseits über die für den Betrieb der Federeinrichtungen erforderliche Robustheit verfügt und andererseits elastische Rückstellkräfte aufweist, die für die Federeinrichtung eine lange Lebensdauer ermöglichen.

Im Folgenden wird die Erfindung anhand einer Ausführungsform unter Bezugnahme auf die Zeichnung näher erläutert.

Es zeigen:
- Figur 1: eine Prinzipdarstellung eines erfindungsgemäßen Portalhubwagens (Straddle Carrier); und
- Figur 2: eine Darstellung einer Ausführungsform einer Federeinrichtung des in Figur 1 gezeigten erfindungsgemäßen Portalhubwagens.

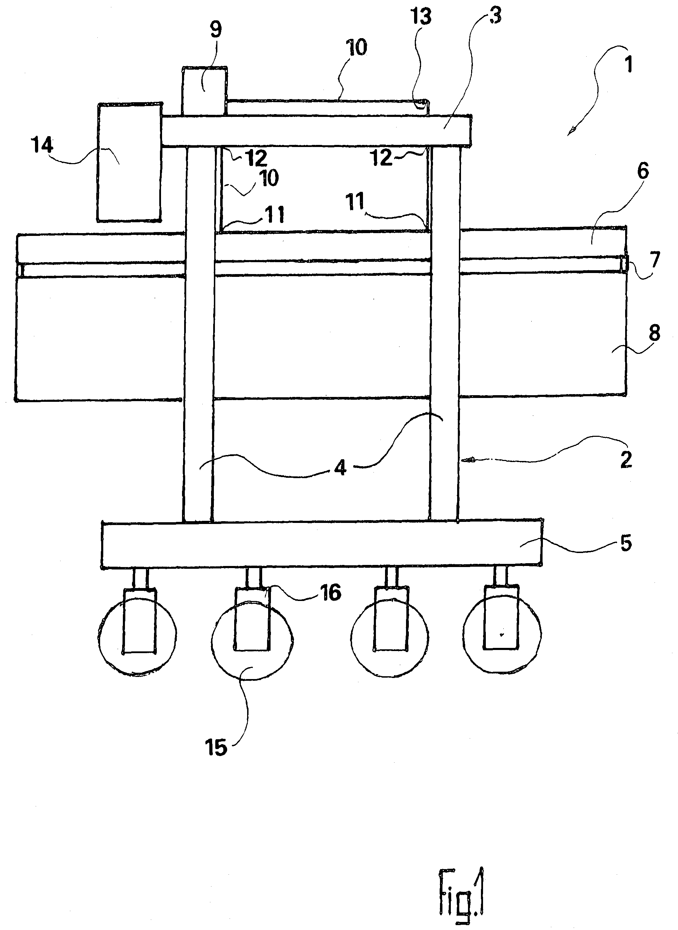

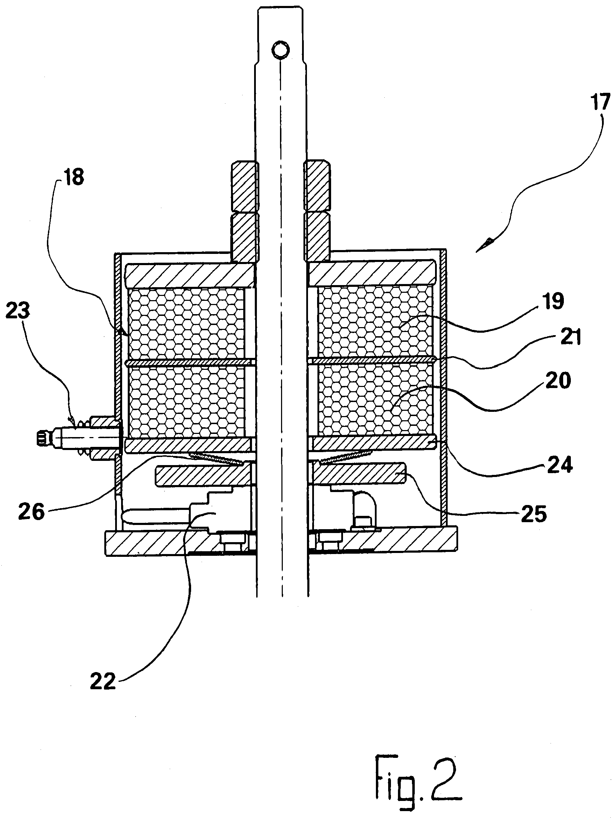

Eine anhand der Figuren 1 und 2 im Folgenden näher erläuterte Ausführungsform eines erfindungsgemäßen Portalhubwagens (Straddle Carrier) 1 hat ein Rahmengestell 2, zu dem ein Oberrahmen 3 gehört, von dem aus vier vertikale Stützen 4 abwärts verlaufen. Die vertikalen Stützen 4 sind etwa an den Ecken des rechteckigen Oberrahmens 3 angeordnet.

An den oberrahmenfernen unteren Enden der an einer Längsseite des Oberrahmens 3 angeordneten beiden vertikalen Stützen 4 ist an beiden Seiten des Portalhubwagens 1 jeweils ein Fahrträger 5 angebracht, von denen in Figur 1 nur einer sichtbar ist. Das Rahmengestell 2 verbindet die beiden Fahrträger 5 nach Art eines Portals.

Am Portalhubwagen 1 ist ein Lastaufnahmemittel, z.B. ein Spreader 6 vorgesehen, der zwischen den den beiden Fahrträgern 5 zugeordneten vertikalen Stützen 4 des Rahmengestells 2 angeordnet ist. Der Spreader 6 ist durch geeignete Verbindungsmittel 7 mit einem Container 8 verbind- bzw. verriegelbar. Des Weiteren ist der Spreader 6 mittels in der in Figur 1 gezeigten Ausführungsform des Portalhubwagens 1 am Oberrahmen 3 des Rahmengestells 2 vorgesehener Hubwinden 9 zwischen den vertikalen Stützen 4 des Rahmengestells 2 vertikal anheb- und absenkbar.

Hierzu ist der Spreader 6 mittels Hubseilen 10, die mit jeweils einem Ende an den Hubwinden 9 befestigt sind und mittels spreader- und rahmengestellseitigen Hubseillagerpunkten 11, 12, 13 geführt sind, an den Hubwinden 9 aufgehängt.

Am Oberrahmen 3 des Rahmengestells 2 ist eine Fahrerkabine 14 vorgesehen, aus der heraus eine Bedienungsperson des Portalhubwagens 1 diesen und den Spreader 6 fahren bzw. steuern kann. Die beiden Fahrträger 9 des Portalhubwagens 1, von denen in Figur 1, wie bereits erwähnt, nur einer sichtbar ist, haben in der dargestellten Ausführungsform des Portalhubwagens 1 jeweils vier Räder 15, denen jeweils ein am Fahrträger 5 gehalterter Radträger 16 zugeordnet ist.

Im dargestellten Ausführungsbeispiel des Portalhubwagens 1 sind die Hubseillagerungen 11, 12, 13 als spreaderseitige Umlenkrollenlager 11, rahmengestellseitige Festpunktlager 12 und rahmengestellseitige Umlenkrollenlager 13 ausgebildet. Wie sich aus der prinzipiellen Darstellung in Figur 1 ergibt, ist das in der Figur 1 linke Hubseil 10 von der Hubwinde 9 zum spreaderseitigen Umlenkrollenlager 11 und von dort zurück zum rahmengestellseitigen Festpunktlager 12 geführt. Das in Figur 1 rechte Hubseil 10 läuft von der Hubwinde 9 zunächst zum rahmengestellseitigen Umlenkrollenlager 13, von dort zum spreaderseitigen Umlenkrollenlager 11 und dann zurück zum rahmengestellseitigen Festpunktlager 12.

Je Hubseil 10 ist einem Hubseillagerpunkt 11, 12 bzw. 13 eine in Figur 2 gezeigte Federeinrichtung 17 zugeordnet. Mittels der Federeinrichtung 17 werden im Betrieb des Portalhubwagens 1 bzw. des Spreaders 6 auftretende Lastsstöße gedämpft, so dass die entsprechenden mechanischen Beanspruchungen der Hubseile 10 reduziert werden.

Hierzu weist die Federeinrichtung 17 im dargestellten Ausführungsbeispiel eine Dämpfungseinheit 18 auf, die zwei in Beanspruchungsrichtung des Hubseils 10 hintereinander angeordnete Federelemente 19, 20 hat. Die beiden Federelemente 19, 20 sind durch eine Zwischenplatte 21 voneinander getrennt. Bei einem auf das Hubseil 10 übertragenen Laststoß wird dieser zu wesentlichen Teilen mittels der beiden Federelemente 19, 20, die sich verformen, aufgenommen. Die Beanspruchung des Hubseils 10 wird entsprechend reduziert. Bei einem Nachlassen der Last nehmen die Federelemente 19, 20 der Dämpfungseinheit 18 aufgrund ihrer Rückstellkräfte wieder ihre ursprüngliche Form ein.

Zur Erfassung der auf das Hubseil 10 ausgeübten Beanspruchungskräfte weist die Federeinrichtung 17 in der in Figur 2 gezeigten Ausführungsform eine Kraftmessdose 22 auf, mittels der ein auf das Hubseil 10 ausgeübter Laststoß, d.h. die auf das Hubseil 10 ausgeübte Kraft und die in der Federeinrichtung 17 aufgrund der Verformung der Federelemente 19, 20 gespeicherte Kraft erfassbar ist.

Darüber hinaus hat die Federeinrichtung 17 im in Figur 2 gezeigten Ausführungsbeispiel eine Schlaffseilerkennungseinrichtung 23, mittels der feststellbar ist, wenn das Hubseil 10 lastfrei ist. Hierzu hat die Schlaffseilerkennungseinrichtung 23 ein dämpfungseinheitsseitiges Plattenelemente 24 und ein kraftmessdosenseitiges Plattenelement 25, die durch eine Trennfeder 26 voneinander weg vorgespannt sind. Sobald der Abstand zwischen den beiden Plattenelementen 24, 25 einen vorgebbaren Wert übersteigt, kann mittels der Schlaffseilerkennungseinrichtung 23 ein entsprechendes Signal generiert werden, mittels dem mitgeteilt wird, dass das Hubseil 10 lastfrei ist.

Selbstverständlich ist es möglich, dass mittels der Kraftmessdose 22 die jeweilige Höhe eines Laststoßes anzeigende Signale generiert und an eine geeignete Steuervorrichtung weitergeleitet werden.

Die beiden Federelemente 19, 20 der Dämpfungseinheit 18 der Federeinrichtung 17 sind aus einem robusten Werkstoff mit einem für entsprechende Belastungen geeigneten Elastizitätsmodul ausgebildet. Zum Beispiel können für die Federelemente 19, 20 Metallgewebekörper zum Einsatz kommen.

## Patentansprüche

1. Portalhubwagen zum Einsatz in Containerterminals und für andere Transportaufgaben, mit einem Rahmengestell (2), einem Lastaufnahmemittel (6), das zwischen dem Rahmengestell (2) hängt und mit einem Container (8) verriegelbar ist, Fahrträgern (5), die am unteren Bereich des Rahmengestells (2) angeordnet sind und jeweils eine Vielzahl in einer Reihe angeordneter Räder (15) aufweisen, und Hubwinden (9), mittels denen Hubseile (10) auf- und abrollbar sind, die mit einem Ende an den Hubwinden (9) angebracht und mittels lastaufnahmemittel- und rahmengestellseitigen Hubseillagerpunkten (11, 12, 13) geführt sind, **dadurch gekennzeichnet, dass** an zumindest einem Hubseillagerpunkt (11, 12, 13) jedes Hubseils (10) des Portalhubwagens (1) eine Federeinrichtung (17) angeordnet ist, mittels der auf die Hubseile (10) übertragene Laststöße dämpfbar sind.

2. Portalhubwagen nach Anspruch 1, bei dem einem rahmengestellseitigen Festpunktlager (12) des Hubseils (10) eine Federeinrichtung (17) zugeordnet ist.

3. Portalhubwagen nach Anspruch 1 oder 2, bei dem einem lastaufnahmemittelseitigen Umlenkrollenlager (11) des Hubseils (10) eine Federeinrichtung (17) zugeordnet ist.

4. Portalhubwagen nach einem der Ansprüche 1 bis 3, bei dem einem rahmengestellseitigen Umlenkrollenlager (13) des Hubseils (10) eine Federeinrichtung zugeordnet ist.

5. Portalhubwagen nach einem der Ansprüche 1 bis 4, dessen Federeinrichtungen (17) eine Kraftmessdose (22) aufweisen, mittels der die Höhe des auf das Hubseil (10) ausgeübten Laststoßes ermittelbar ist.

6. Portalhubwagen nach einem der Ansprüche 1 bis 5, dessen Federeinrichtungen (17) eine Schlaffseilerkennungseinrichtung (23) aufweisen, mittels denen eine Erschlaffung des Hubseils (10) erfassbar ist.

7. Portalhubwagen nach Anspruch 6, bei dem die Schlaffseilerkennungseinrichtung (23) zwei voneinander weg vorgespannte Plattenelemente (24, 25) aufweist, deren Abstand messbar ist.

8. Portalhubwagen nach einem der Ansprüche 1 bis 7, dessen Federeinrichtungen (17) eine Dämpfungseinheit (18) mit zumindest zwei in Lastrichtung hintereinander angeordneten Federelementen (19, 20) aufweisen.

9. Portalhubwagen nach Anspruch 8, bei dem die Federelemente (19, 20) der Dämpfungseinrichtung (18) aus einem Metallgewebekörpern od.dgl. ausgebildet sind.

## Claims

1. A straddle carrier for use in container terminals and for other transport purposes, with a frame (2), a load receiving means (6), which is suspended between the frame (2) and can be locked to a container, drive carriers (5) which are arranged on the lower region of the frame (2) and each of which comprise a plurality of wheels (15) arranged in a row, and screw jacks (9), by means of which hoisting cables (10) can be wound up and down, which with one end are attached to the screw jacks (9) and are guided by means of hoisting cable bearing points (11, 12, 13) on the load receiving means side and frame side, **characterized in that** on at least one hoisting cable bearing point (11, 12, 13) of each hoisting cable (10) of the straddle carrier (1) a spring device (17) is arranged, by means of which the instantaneous loads transmitted to the hoisting cables (10) can be dampened.

2. The straddle carrier according to Claim 1, wherein a fixed bearing point (12) of the hoisting cable (10) on the frame side is assigned a spring device (17).

3. The straddle carrier according to Claim 1 or 2, wherein a return pulley bearing (11) of the hoisting cable (10) on the load receiving means side is assigned a spring device (17).

4. The straddle carrier according to any one of the Claims 1 to 3, wherein a return pulley bearing (13) of the hoisting cable (10) on the frame side is assigned a spring device.

5. The straddle carrier according to any one of the Claims 1 to 4, whose spring devices (17) comprise a load cell (22), by means of which the amount of the instantaneous load exerted on the hoisting cable (10) can be determined.

6. The straddle carrier according to any one of the Claims 1 to 5, whose spring devices (17) comprise a slack cable detection device (23), by means of which a slackening of the hoisting cable (10) can be detected.

7. The straddle carrier according to Claim 6, wherein the slack cable detection device (23) comprises two plate elements (24, 25) preloaded away from each other, the spacing of which can be measured.

8. The straddle carrier according to any one of the Claims 1 to 7, whose spring devices (17) comprise a damping unit (18) with at least two spring elements (19, 20) arranged one after the other in load direction.

9. The straddle carrier according to Claim 8, wherein the spring elements (19, 20) of the damping device (18) are formed of a metal fabric body or the like.

## Revendications

1. Chariot cavalier destiné à l'utilisation dans des terminaux de conteneurs et pour d'autre tâches de transport, avec un châssis de cadre (2), un moyen de prise en charge (6), qui est suspendu entre le châssis de cadre (2) et peut être verrouillé avec un conteneur (8), des supports mobiles (5), qui sont disposés sur la zone inférieure du châssis de cadre (2) et comportent respectivement une pluralité de roues (15) disposées en rangée et des treuils (9), au moyen desquels des câbles de levage (10) peuvent être enroulés et déroulés, qui sont montés avec une extrémité sur les treuils (9) et sont guidés au moyen de points de support de câble (11, 12, 13) du côté du moyen de prise en charge et du châssis de cadre, **caractérisé en ce que** sur au moins un point de support de câble de levage (11, 12, 13) de chaque câble de levage (10) du chariot cavalier (1) est disposé un dispositif à ressort (17) au moyen duquel les impacts de charge transmis aux câbles de levage (10) peuvent être amortis.

2. Chariot cavalier selon la revendication 1, pour lequel un dispositif à ressort (17) est attribué à un support à point fixe (12) côté châssis de cadre du câble de levage (10).

3. Chariot cavalier selon la revendication 1 ou 2, pour lequel un dispositif à ressort (17) est attribué à un support de poulie de renvoi (11) du câble de levage (10) .

4. Chariot cavalier selon l'une quelconque des revendications 1 à 3, pour lequel un dispositif à ressort est attribué à un support de poulie de renvoi (13) côté châssis de cadre du câble de levage (10).

5. Chariot cavalier selon l'une quelconque des revendications 1 à 4, dont les dispositifs à ressort (17) comportent un capteur dynamométrique (22) au moyen du quel la hauteur de l'impact de charge exercé sur le câble de levage (10) peut être déterminée.

6. Chariot cavalier selon l'une quelconque des revendications 1 à 5, dont les dispositifs à ressort (17) comportent un dispositif d'identification de câble mou (23) au moyen duquel un relâchement du câble de levage (10) peut être saisi.

7. Chariot cavalier selon la revendication 6, pour lequel le dispositif d'identification de câble mou (23) comporte deux éléments à plaque (24, 25) précontraints éloignés l'un de l'autre dont la distance peut être mesurée.

8. Chariot cavalier selon l'une quelconque des revendications 1 à 7, dont les dispositifs à ressort (17) comportent une unité d'amortissement (18) avec au moins deux éléments à ressort (19, 20) disposés l'un derrière l'autre dans la direction de la charge.

9. Chariot cavalier selon la revendication 8, pour lequel les éléments à ressort (19, 20) du dispositif d'amortissement (18) sont constitués d'un corps de tissu métallique ou d'un élément analogue.
